# EUROPÄISCHE PATENTSCHRIFT

(11) **EP 2 585 282 B1**
(45) Veröffentlichungstag und Bekanntmachung des Hinweises auf die Patenterteilung: **29.04.2020**
(21) Anmeldenummer: 11779563.3
(22) Anmeldetag: 20.06.2011
(51) Int. Cl.: B29C 70/44, B29C 43/36, B29C 70/54

(54) **FORMWERKZEUG ZUR HERSTELLUNG VON FASERVERSTÄRKTEN BAUTEILEN**
MOLD FOR PRODUCING FIBER-REINFORCED COMPONENTS
OUTIL DE FORMAGE SERVANT À PRODUIRE DES PIÈCES RENFORCÉES PAR DES FIBRES

(30) Priorität: 25.06.2010 DE 102010025068
(43) Veröffentlichungstag der Anmeldung: 01.05.2013
(73) Patentinhaber: Airbus Defence and Space GmbH, 85521 Ottobrunn (DE)
(72) Erfinder: FILSINGER, Jürgen, 85635 Höhenkirchen-Siegertsbrunn (DE); STRACHAUER, Frank, 82319 Starnberg (DE)
(74) Vertreter: Kastel, Stefan
(86) Internationale Anmeldenummer: PCT/DE2011/001324
(87) Internationale Veröffentlichungsnummer: WO 2012/010129

(56) Entgegenhaltungen:
- DE-A1-102006 045 635
- DE-C1- 10 013 409
- DE-C1- 19 536 675
- US-A1- 2007 296 126

## Beschreibung

Die Erfindung betrifft eine Herstellvorrichtung zur Herstellung von faserverstärkten Bauteilen mittels eines Injektionsverfahrens sowie ein Verfahren zur Herstellung von faserverstärkten Bauteilen mittels eines Injektionsverfahrens.

Bei Injektionsverfahren werden meist trockene Faserhalbzeuge mit einem Matrixmaterial infiltriert und ausgehärtet. Solche Verfahren werden auch als Liquid Resin Infusion (LRI) Verfahren bezeichnet. Die Faserhalbzeuge können aus Kohlefasern (CFK), Glasfasern (GFK), Aramidfasern (AFK), Borfasern (BFK) oder Hybridwerkstoffen sowie aus den entsprechenden Geweben oder Gelegen gebildet sein.

US 2007 / 0 296 126 A1 beschreibt eine Vorrichtung und ein Verfahren zur Herstellung von faserverstärkten Bauteilen mittels eines Injektionsverfahrens, wobei ein Plastiksack an einer Formoberfläche befestigt wird und das dadurch entstehende Volumen durch den Plastiksack evakuiert sowie mit Matrixmaterial infiltriert wird.

Ein bekanntes Verfahren zur Herstellung von faserverstärkten Bauteilen mittels eines Injektionsverfahrens ist in der DE 100 13 409 C1 beschrieben. Hierbei wird ein Faserhalbzeug auf einem Formwerkzeug abgelegt. Auf der Oberfläche des Faserhalbzeuges wird eine Fließhilfe angeordnet und durch Vorsehen einer gasdurchlässigen und matrixmaterialundurchlässigen Membran um das Fasermaterial und die Fließhilfe herum ein erster Raum gebildet. Ein zweiter Raum wird um den ersten Raum herum gebildet, indem eine gas- und matrixmaterialundurchlässige Folie angeordnet und an dem Formwerkzeug abgedichtet wird. Die Fließhilfe ist mit einem Vorratsbehälter für das Matrixmaterial verbunden. In den zweiten Raum ragt eine Vakuumleitung. Wird nun über die Vakuumleitung ein Unterdruck angelegt, wird durch die sich ergebende Druckdifferenz das Matrixmaterial aus dem Vorratsbehälter in die Fließhilfe eingesaugt, d.h. in den ersten Raum injiziert, und über dem Faserhalbzeug verteilt. Das Matrixmaterial tränkt das Faserhalbzeug und härtet aus. Die luftdurchlässige aber matrixmaterialundurchlässige Membran verhindert, dass das Matrixmaterial in den zweiten Raum und somit in die Vakuumleitung eindringt, ermöglicht aber gleichzeitig ein Absaugen der in dem Matrixmaterial und dem Faserhalbzeug befindlichen Luft. So kann das ohne Lufteinschlüsse aushärten und es können qualitativ hochwertige faserverstärkte Bauteile hergestellt werden.

Eine Verbesserung dieser Prozessführung kann durch die in der DE 101 401 66 B4 beschriebene Anordnung erzielt werden. Hier sind zusätzlich Drucksteuerungsmittel vorgesehen, die gegen Ende der Injektionsphase oder danach einen Unterdruck im Vorratsbehälter erzeugen und dadurch eine bessere Kontrollierbarkeit des Verfahrens und der Bauteilqualität herstellen.

Eine Vorrichtung zur verbesserten Entgasung des Faserhalbzeuges und des Matrixmaterials ist in der DE 102 03 975 C1 beschrieben. Hier wird in dem ersten Raum oberhalb der ersten Fließhilfe eine für das Matrixmaterial undurchlässige Sperrschicht angeordnet und darauf eine weitere Fließhilfe vorgesehen. In dem Bereich, in dem sich die Sperrschicht zwischen der ersten und der zweiten Fließhilfe befindet, wird auf die zweite Fließhilfe eine Angussvorrichtung aufgebracht, über die das Matrixmaterial in den ersten Raum injiziert wird. Bei Anlegen eines Unterdruckes fließt nun das Matrixmaterial zunächst in die zweite Fließhilfe, wobei durch den angelegten Unterdruck in dem Matrixmaterial und in dem Faserhalbzeug vorhandene Luft entweichen kann. Die Sperrschicht verhindert dabei, dass das Matrixmaterial bereits im Bereich der Angussvorrichtung mit der ersten Fließhilfe in Kontakt kommt. Das Matrixmaterial durchdringt daher zunächst in horizontaler Richtung die zweite Fließhilfe. Die Sperrschicht ist derart angeordnet, dass sich die erste und die zweite Fließhilfe an einer von der Angussvorrichtung entfernten Stelle berühren. An dieser Stelle tritt das Matrixmaterial mit der ersten Fließhilfe in Kontakt und verteilt sich über diese. Von dort wird es in Dickenrichtung zu dem Faserhalbzeug weitergeleitet und durchtränkt dieses. Der mittels der Sperrschicht verlängerte Weg des Matrixmaterials durch das evakuierte Volumen des ersten Raumes bewirkt, dass die in dem Matrixmaterial und in dem Faserhalbzeug vorhandene Luft zunächst entweicht, bevor es das Faserhalbzeug durchtränkt. So können Lufteinschlüsse weiter verringert werden und die Qualität der Bauteile weiter erhöht werden.

Die DE 101 56 123 B4 beschreibt einen Aufbau, mittels dessen ein Prepreg-Halbzeug, das bereits mit Harz getränkt ist, mit einem mit Matrixmaterial zu tränkenden Textilhalbzeug verbunden wird.

DE 10 2006 045 635 A1 offenbart ein Verfahren zum Anbinden von vorgehärteten Stringern an mindestens ein Strukturbauteil eines Luft- oder Raumfahrzeuges. Eine für das Anbinden benötigte Vakuumanordnung wird zweiteilig erstellt. In einem ersten Schritt wird vorab jeder vorgehärtete Stringer mit einer Abdeckvakuumfolie bedeckt. Die so präparierten Stringer werden auf dem Strukturbauteil angeordnet. Nachfolgend werden jeweils Vakuumfolienstreifen auf benachbarten Stringern und über einem Zwischenraum zwischen den benachbarten Stringern angeordnet. Unter Verwendung eines Vakuumversiegelungsmittels bilden die Vakuumfolienstreifen und die Abdeckvakuumfolien eine durchgehende Vakuumanordnung. Die Stringer werden anschließend unter Verwendung dieser Vakuumanordnung druckbeaufschlagt an das Strukturbauteil angebunden.

DE 195 36 675 C1 offenbart, dass bei einem Verfahren zur Herstellung von großflächigen Bauelementen aus Faserverbundwerkstoffen nach dem RTM-Verfahren ist eine evakuierbare Form mit einem formstabilen Formteil und einem elastisch verformbaren Formteil vorgesehen wird. Die Form ist mit Anschlüssen für die Injektion des Harzgemisches und für eine Drucksenke versehen. In die Form wird eine Fasergelegegarnitur gelegt. Für die Injektion des Harzgemisches und den Anschluß an die Drucksenke sind auf der dem formbeständigen Formteil gegenüberliegenden Oberfläche der Fasergelegegarnitur aufliegende Leitungselemente vorgesehen, die eine große Längserstreckung und eine breitflächige Auflagefläche haben, oberhalb der Auflagefläche mit einem sich in Längsrichtung der Elemente erstreckenden Hohlraum versehen sind und in der Auflagefläche mit einem sich im wesentlichen über die gesamte Länge des Leitungselementes erstreckenden schmalen Schlitz versehen sind, der über seine Länge mit dem Hohlraum verbunden ist. Die Leitungselemente sind mit wenigstens einem Ende zwischen den Rändern des elastisch verformbaren und des formstabilen Formteiles hindurch nach außen geführt und mit der Harzzuleitung bzw. der Drucksenke verbunden.

Allen diesen Vorrichtungen und Verfahren ist gemeinsam, dass vor Beginn des Verfahrens zunächst ein aufwändiger Aufbau bestehend aus der Abzieheinrichtung, der Fließhilfe und der gasdurchlässigen und matrixmaterialundurchlässigen Membran zum Bilden des ersten Raumes hergestellt werden muss.

Eine Verbesserung wird daher in der DE 10 2008 006 261 B3 vorgeschlagen, in der eine gasdurchlässige aber matrixmaterialundurchlässige Membran beschrieben ist, auf der eine Fließhilfe auflaminiert sowie eine Abzieheinrichtung angeordnet ist. Durch Vorsehen eines solchen Multifunktionslaminats muss lediglich eine Schicht zum Bilden des ersten Raumes über dem Faserhalbzeug angeordnet werden. Dies vereinfacht den Prozessaufbau deutlich.

Um auch Bauteile mit unterschiedlichen Krümmungen und/oder Torsionen herstellen zu können, beschreibt die DE 10 2008 028 865 A1 das Vorsehen eines krümmbaren bzw. tordierbaren Faserhalbzeugs.

Den zuvor genannten Vorrichtungen und Verfahren ist weiter gemeinsam, dass zur Bildung des zweiten Raumes eine gas- und matrixmaterialundurchlässige Folie sowie ein Abstandshalter über der gasdurchlässigen und matrixmaterialundurchlässigen Membran angeordnet wird. Zusätzlich sind teilweise über der gas- und matrixmaterialundurchlässigen Folie weitere Formwerkzeuge zum Bilden einer geformten Innenoberfläche des faserverstärkten Bauteiles vorgesehen. Insbesondere bei großen Bauteilen mit komplexer Innenkontur bedeutet die Erstellung dieses Aufbaus einen erheblichen manuellen Aufwand.

Aufgabe der Erfindung ist es daher, eine Herstellung von faserverstärkten Bauteilen mittels eines Injektionsverfahrens mit einem weniger komplizierten und aufwändigen Aufbau zu ermöglichen.

Die Aufgabe wird durch ein Formwerkzeug mit den Merkmalen des Anspruches 1 gelöst. Eine Vorrichtung zum Herstellen von faserverstärkten Bauteilen mittels eines Injektionsverfahrens sowie ein Verfahren zum Herstellen von faserverstärkten Bauteilen mittels eines Injektionsverfahrens sind Gegenstände der Nebenansprüche.

Vorteilhafte Ausgestaltungen der Erfindung sind Gegenstand der Unteransprüche.

Die Erfindung schafft ein Formwerkzeug für eine Herstellvorrichtung zum Herstellen von faserverstärkten Bauteilen mittels eines Injektionsverfahrens, wobei das Formwerkzeug eine Formoberfläche zum Formen einer Oberfläche des faserverstärkten Bauteils aufweist, wobei das Formwerkzeug aus mehreren Teilformwerkzeugen gebildet ist. Weiter ist ein erstes Teilformwerkzeug vorgesehen, das einen ersten Teilbereich der Formoberfläche umfasst und das einen Evakuierungsbereich zum Evakuieren eines durch das Formwerkzeug begrenzten Formvolumens durch den ersten Teilbereich hindurch aufweist, wobei im ersten Teilbereich Strömhilfen zum Unterstützen eines Evakuierens des Formvolumens angeordnet sind. Zudem ist ein zweites Teilformwerkzeug vorgesehen, das einen zweiten Teilbereich der Formoberfläche umfasst und das einen zum Injizieren von Matrixmaterial durch den zweiten Teilbereich hindurch in an der Formoberfläche befindliches Fasermaterial ausgebildeten Injektionsbereich aufweist, wobei im zweiten Teilbereich der Formoberfläche Fließhilfen zur Unterstützung einer Verteilung des injizierten Matrixmaterials angeordnet sind. Die Fließhilfen weisen Rillen oder Kanäle auf.

Somit ist sowohl die Matrixmaterialzuleitung als auch die Vakuumleitung vorteilhaft in dem Formwerkzeug eingebracht und ein komplizierter und aufwändiger Aufbau bei den zuvor beschriebenen Vorrichtungen wird überflüssig. So kann das Verfahren deutlich vereinfacht werden.

In bevorzugter Ausgestaltung ist an der Formoberfläche eine Abzieheinrichtung zum leichteren Entfernen des Formwerkzeuges von einem faserverstärkten Bauteil angeordnet. Diese Abzieheinrichtung ermöglicht es nach dem Aushärten des in das Fasermaterial eingebrachten Matrixmaterials, dass das Formwerkzeug vorteilhaft leicht von der Oberfläche des so gebildeten faserverstärkten Bauteils entfernt werden kann.

Weiter vorzugsweise weist der erste Teilbereich der Formoberfläche eine semi-permeable Membran zum Durchlassen von Gasen und zum Zurückhalten von Matrixmaterial auf. Die semipermeable Membran ermöglicht es, dass Gase durch Anlegen eines Vakuums an den Evakuierungsbereich aus dem Formvolumen entfernt werden können, wobei gleichzeitig das Matrixmaterial in dem Formvolumen zurückgehalten wird. Dadurch kann vorteilhaft kein Matrixmaterial in den Evakuierungsbereich eindringen und diesen verkleben und so unwirksam machen.

Vorzugsweise sind im ersten Teilbereich der Formoberfläche die semipermeable Membran und die Abzieheinrichtung als Verbund gebildet. Durch die Verwendung eines Verbundes ist lediglich ein Schritt zum Anbringen von Membran und Abzieheinrichtung nötig, während ansonsten zwei einzelne Zuschnitte auf dem Formwerkzeug angebracht werden müssen. Vorteilhaft ist dieser Verbund mit einem umlaufenden Klebstoff an der Formoberfläche fixiert. Der umlaufende Klebstoff ist zum einen zum Fixieren des Verbundes vorgesehen und verhindert zum anderen, dass über den Rand das flüssige Matrixmaterial in den Evakuierungsbereich einströmt. Der umlaufende Klebstoff kann vorzugsweise auch zum Fixieren und Abdichten einzelner Zuschnitte der semipermeablen Membran und/oder der Abzieheinrichtung verwendet werden.

Mittels der im zweiten Teilbereich der Formoberfläche angeordneten Fließhilfen zur besseren Verteilung des injizierten Matrixmaterials wird das Matrixmaterial schnell und gleichmäßig über dem Fasermaterial verteiltDadurch wird das Matrixmaterial vorzugsweise mit verhältnismäßig geringem Fließwiderstand über die Fasermaterialfläche verteilt und tränkt das Fasermaterial im Wesentlichen in Dickenrichtung. Vorteilhaft sind Kanäle und/oder Rillenmuster zur Verteilung des Matrixmaterials im zweiten Teilbereich des Formoberfläche vorgesehen, wodurch zusätzliche Hilfsstoffe in Form von Angusskanälen oder flächigen Fließhilfen eingespart werden können. Vorzugsweise ist die integrierte Matrixverteilung derart ausgestaltet, dass sie sich möglichst wenig in die Oberfläche des faserverstärkten Bauteils einprägt.

Um vorteilhaft eine ausreichende Luftleitung im ersten Teilbereich der Formoberfläche bereitzustellen, sind, vorzugsweise entsprechend dimensionierte, Strömhilfen im ersten Teilbereich der Formoberfläche vorgesehen. Diese können vorzugsweise als Rillen ausgebildet sein. Alternativ kann jedoch ein Textil, z.B. ein Gewebe, ein Gewirk, ein Vlies oder ein Gitter im ersten Teilbereich der Formoberfläche vorgesehen sein.

Daher sind die Strömhilfen an der Formoberfläche als Rillen oder Kanäle ausgebildet.

In besonders bevorzugter Ausführungsform sind die Teilformwerkzeuge, in denen der erste Teilbereich der Formoberfläche und der zweite Teilbereich der Formoberfläche gebildet sind, voneinander getrennt, aber miteinander verbindbar ausgebildet. So ist es vorteilhaft möglich, je nach gewünschtem faserverstärktem Bauteil, eine individuelle Anzahl von Evakuierungsbereichen und Injektionsbereichen an dem Formwerkzeug vorzusehen.

Vorzugsweise ist eine Verbindungseinrichtung zum dichten Verbinden der Teilformwerkzeuge vorgesehen. Mittels der Verbindungseinrichtung können die voneinander getrennten Teilformwerkzeuge vorzugsweise vakuumdicht miteinander verbunden werden. Die Verbindungseinrichtung kann dabei vorzugsweise aus einem flexiblen Klebe- oder Dichtband, einem flüssigen oder gelartigen Dichtstoff, aus an den Teilformwerkzeugen aufgeklebten oder in diese eingelassenen Profildichtungen oder aus an den Teilformwerkzeugen angebrachten oder in diese integrierte flexible Dichtlippen gebildet sein.

Dadurch, dass Teilformwerkzeuge mit unterschiedlichen Bereichen, nämlich dem Injektions- oder dem Evakuierungsbereich vorgesehen sind, kann das Formwerkzeug zum Bilden des faserverstärkten Bauteiles bevorzugt modulartig aufgebaut werden. Dadurch sind vorteilhaft sowohl unterschiedliche Bauteilformen als auch verschiedene Bauteilgrößen unter Verwendung derselben Teilformwerkzeuge erreichbar.

Eine Herstellvorrichtung zum Herstellen von faserverstärkten Bauteilen mittels eines Injektionsverfahrens weist vorteilhaft ein Formwerkzeug mit einer Formoberfläche zum Bilden einer Oberfläche des faserverstärkten Bauteils und eine Vakuumeinrichtung zur Evakuierung eines zumindest teilweise durch die Formoberfläche begrenzten Formvolumens, innerhalb dem das Injektionsverfahren durchzuführen ist, auf. Weiter weist die Herstellvorrichtung eine Injektionseinrichtung zum Injizieren von Matrixmaterial in das Formvolumen auf, um ein innerhalb des Formvolumens im Bereich der Formoberfläche anzuordnendes Fasermaterial zu durchdringen.

Vorzugsweise weist die Injektionseinrichtung eine Matrixverteilungseinrichtung zum Verteilen eines Matrixmaterials auf. Die Matrixverteilungseinrichtung umfasst einerseits Leitungen, die das Matrixmaterial über verschiedene Stellen des Fasermaterials leiten, und andererseits einen Vorratsbehälter zum Speichern des Matrixmaterials. Wird nun durch die Vakuumeinrichtung ein Vakuum erzeugt, wird das Matrixmaterial durch die Druckdifferenz aus dem Vorratsbehälter in die Leitungen und schließlich durch die Injektionseinrichtung in das Formvolumen gesaugt. Dort tränkt es das Fasermaterial.

Vorteilhaft weist der Injektionsbereich Matrixleitungen zum Anschließen an die Injektuonseinrichtung auf. So kann von einem Matrixmaterial-Vorratsbehälter einfach das Matrixmaterial zum Injektionsbereich hingeleitet werden.

Weiter vorteilhaft weist der Evakuierungsbereich Vakuumleitungen zum Anschließen an die Vakuumeinrichtung auf. Damit kann der Evakuierungsbereich einfach an eine Vakuumpumpe angeschlossen werden.

Vorzugsweise ist eine umlaufende Abschlusseinrichtung zum Definieren des zu evakuierenden Formvolumens an dem Formwerkzeug vorgesehen.
Die Abschlusseinrichtung trennt vorzugsweise die Umgebung von dem Formvolumen in dem Formwerkzeug, in das das Fasermaterial eingebracht wird. Die Abschlusseinrichtung ist vorteilhaft derart ausgebildet, dass das Formvolumen vakuumdicht gegenüber der Umgebung abgeschlossen wird. Die Abschlusseinrichtung ist vorzugsweise flexibel ausgebildet, um gegegenenfalls auftretende Verschiebungen während des Herstellungsverfahrens des faserverstärkten Bauteiles, z.B. durch das Kompaktieren des Fasermaterials unter Vakuum oder während der Infusion des Matrixmaterials bzw. aufgrund thermischer Ausdehnung, ausgleichen zu können. Vorteilhaft kann daher die Abschlusseinrichtung ein flexibles Klebe- oder Dichtband, ein flüssiger oder gelartiger Dichtstoff, eine an dem Formwerkzeug aufgeklebte oder in diese eingelassene Profildichtung oder eine an dem Formwerkzeug angebrachte oder darin integrierte flexible Dichtlippe sein.

Bei einem Verfahren zum Herstellen von faserverstärkten Bauteilen mittels eines Injektionsverfahrens mit den Schritten
- Anordnen von Fasermaterial in einem Formvolumen, das wenigstens an einer Seite durch eine Formoberfläche eines aus mehreren Teilwerkzeugen gebildeten Formwerkzeugs begrenzt wird,
- Evakuieren des Formvolumens und Injizieren von Matrixmaterial in das Formvolumen,
wird das Injizieren des Matrixmaterials in das Formvolumen durch einen zweiten Teilbereich der Formoberfläche hindurch und das Evakuieren des Formvolumens durch einen ersten Teilbereich der Formoberfläche hindurch durchgeführt.

Dadurch entfällt der komplizierte Aufbau von zwei Räumen über dem Fasermaterial und der Aufbau wird deutlich vereinfacht.

Vorteilhaft erfolgt das Evakuieren des Formvolumens durch eine an der Formoberfläche angeordnete semipermeamble Membran. Die semipermeable Membran ist vorteilhaft derart ausgestaltet, dass sie zwar Gase hindurch lässt, aber das Matrixmaterial zurückhält. Daher kann vorteilhaft kein Matrixmaterial in dem Evakuierungsbereich, d.h. dem ersten Teilbereich der Formoberfläche, eindringen und diesen verkleben.

Vorzugsweise ist die Formoberfläche durch Verbinden von wenigstens zwei voneinander getrennt ausgebildeten Teilformwerkzeugen gebildet. Dadurch ist es möglich, die Formoberfläche, die während des Verfahrens die Oberfläche des faserverstärkten Bauteiles abbildet, flexibel aus mehreren Teilformwerkzeugen aufzubauen und so eine Flexibilität hinsichtlich der Bauteilform und -größe zu erreichen.

Bei der Herstellung von Faserverbundbauteilen mittels der vakuumunterstützten Prozessführung (englisch: vacuum assisted process, VAP) ist bislang ein erheblicher manueller Aufwand für die Prozessvorbereitung erforderlich. Die Erfindung, die nachfolgend in einem Ausführungsbeispiel erläutert wird, dient der Automatisierung des Infusionsaufbaus.

Ein typischer VAP-Aufbau zeichnet sich durch einen sich in einem einseitigen Formwerkzeug befindlichen Faservorformling, d.h. das Fasermaterial, durch Hilfsstoffe zur Verteilung des Matrixmaterials in Form von Harz, eine darüber angeordnete mikroporöse semipermeable Membran und einen den Aufbau umschließenden Vakuumsack aus, desssen Folie gas- und matrixundurchlässig ist. Teilweise sind auf der der Membran und dem Vakuumsack zugewandten Seite lokal ebenfalls Formwerkzeuge (Druckstücke) vorgesehen. Es ist leicht nachzuvollziehen, dass insbesondere bei großen Bauteilen mit komplexer Innenkontur (z.B. sphärisch, mit Versteifungen etc.) die Erstellung dieses Aufbaus einen erheblichen manuellen Aufwand bedeutet. Teilweise ist zwar vorgesehen, die Verteilung des Matrixmaterials in Form von geeignet dimensionierten Kanälen und Rillen in das Formwerkzeug und/oder die Druckstücke zu integrieren, doch das fehlerfreie Anbringen und Abdichten der beiden Folien (Membran und Vakuumfolie) übereinander ist nach wie vor ein Problem.

Bei einer vorteilhaften Ausgestaltung der Erfindung wird daher die Saugseite mit Membran, Vakuumverteilung und Vakuumanschlüssen ebenfalls in die Druckstücke integriert. Die Innenseite des Bauteils wird nahezu vollständig mit diesen Druckstücken (bzw. abwechselnd mit diesen und solchen mit integrierter Harzverteilung) bedeckt. Eine Abdichtung des Vakuumaufbaus ist dann lediglich zwischen den Druckstücken und entlang des Bauteilrandes erforderlich, sofern nicht sogar eine Dichtschnur oder Dichtlippe (z.B. aus Silikon) ausreicht. Die saugseitigen Druckstücke können an einem separaten Arbeitsplatz vorbereitet - bei einfacher Geometrie (z.B. konstante Breite) ohne weiteres auch automatisiert - und mit einer entsprechenden Vorrichtung auf dem Infusionsaufbau positioniert werden.

Dadurch lässt sich eine drastische Reduzierung des manuellen Aufwands sowie eine Verringerung der Durchlauf- und Formbelegungszeiten erreichen.

Ein Ausführungsbeispiel der Erfindung wird nachfolgend anhand der beigefügten Zeichnungen näher erläutert. Darin zeigt:
- Fig. 1: eine Schnittansicht einer Herstellvorrichtung zur Herstellung von faserverstärkten Bauteilen mit einem Formwerkzeug, das mehrere Teilformwerkzeuge aufweist;
- Fig. 2: eine Ansicht von unten auf eines der Teilformwerkzeuge aus Fig. 1; und
- Fig. 3: eine Schnittansicht durch die Linie A-A durch das Teilformwerkzeug der Fig. 2.

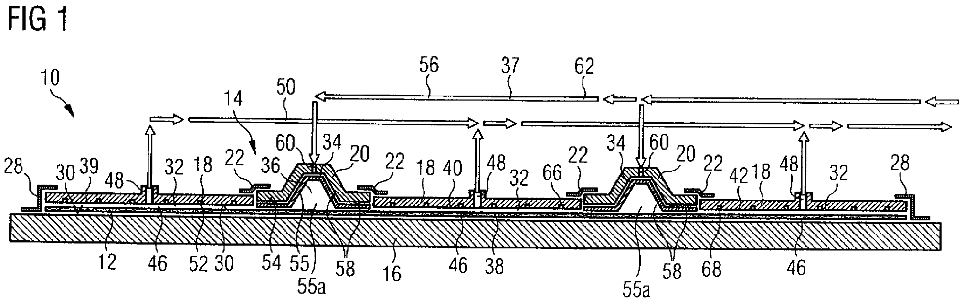

Fig. 1 zeigt eine Herstellvorrichtung 10 zum Herstellen von faserverstärkten Bauteilen 12 mittels eines Injektionsverfahrens. Die Herstellvorrichtung 10 weist ein erstes Formwerkzeug 14 und ein zweites Formwerkzeug 16 auf. Das erste Formwerkzeug 14 ist aus mehreren Teilformwerkzeugen 18, 20 gebildet. Die Teilformwerkzeuge 18, 20 sind durch Verbindungseinrichtungen 22 miteinander verbunden. Das erste Formwerkzeug 14 ist durch umlaufende Abschlusseinrichtungen 28 mit dem zweiten Formwerkzeug 16 verbunden.

Das erste Formwerkzeug 14 und das zweite Formwerkzeug 16 weisen jeweils an den zueinander zuzuwendenden Seiten eine Formoberfläche 30 auf. Die Formoberfläche 30 an dem ersten Formwerkzeug 14 wird dabei von ersten Teilbereichen 32 an den ersten Teilformwerkzeugen 18 und von zweiten Teilbereichen 34 an den zweiten Teilformwerkzeugen 20 gebildet.

Die beiden Formoberflächen 30 des ersten Formwerkzeuges 14 und des zweiten Formwerkzeuges 16 bilden zusammen mit den Abschlusseinrichtungen 28 ein zu evakuierendes Formvolumen 36, in das ein Fasermaterial 38 zur Tränkung mit Matrixmaterial 37 und zur Bildung eines faserverstärkten Bauteils 12 eingebracht werden kann.

In dem ersten Teilbereich 32 der Formoberfläche 30 an dem ersten Teilformwerkzeug 18 ist eine semipermeable Membran 39 angeordnet. Weiter ist an der zu der Formoberfläche 30 des zweiten Formwerkzeuges 16 zuzuwendenden Seite der semipermeablen Membran 39 eine Abzieheinrichtung 40 vorgesehen, die das Ablösen des ersten Teilformwerkzeuges 18 von dem fertigen faserverstärkten Bauteil 12 erleichtert. Die semipermeable Membran 39 und die Abzieheinrichtung 40 können in dem ersten Teilbereich 32 als ein Verbund 42 ausgebildet sein. Die semi-permeable Membran 39, die Abzieheinrichtung 40 bzw. der Verbund 42 sind mit einem umlaufenden Klebstoff 44 an dem ersten Teilbereich 32 der Formoberfläche 30 des ersten Formwerkzeuges 14 fixiert.

Weiter weist das erste Teilformwerkzeug 18 einen Evakuierungsbereich 46 und eine Vakuumleitung 48 zum Anschließen an eine Vakuumeinrichtung 50 auf. An der dem zweiten Formwerkzeug 16 zuzuwendenden Seite des ersten Teilformwerkzeuges 18 sind Strömhilfen 52 zum besseren Evakuieren des Formvolumens 36 angeordnet.

Das zweite Teilformwerkzeug 20 weist an seiner zu dem zweiten Formwerkzeug 16 zuzuwendenden Seite lediglich die Abzieheinrichtung 40 auf. Weiter sind auf dieser Seite Fließhilfen 54 zur besseren Verteilung von zu injizierendem Matrixmaterial 37 angeordnet. Das zweite Teilformwerkzeug 20 ist um ein Versteifungselement 55 angeordnet, das später in dem faserverstärkten Bauteil 12 verbleibt. Unter dem Versteifungselement verbleibt im späteren faserverstärkten Bauteil 12 durch Einbringen von beispielsweise einem Kern aus Schaummaterial oder Metall ein Hohlraum 55a.

An dem zweiten Teilformwerkzeug 20 ist somit eine Injektionseinrichtung 56 mit einem Injektionsbereich 58 zum Injizieren von Matrixmaterial 37 ausgebildet. Das zweite Teilformwerkzeug 20 umfasst weiter Matrixleitungen 60, mit denen das zweite Teilformwerkzeug 20 an eine Matrixverteilungseinrichtung 62 angeschlossen werden kann.

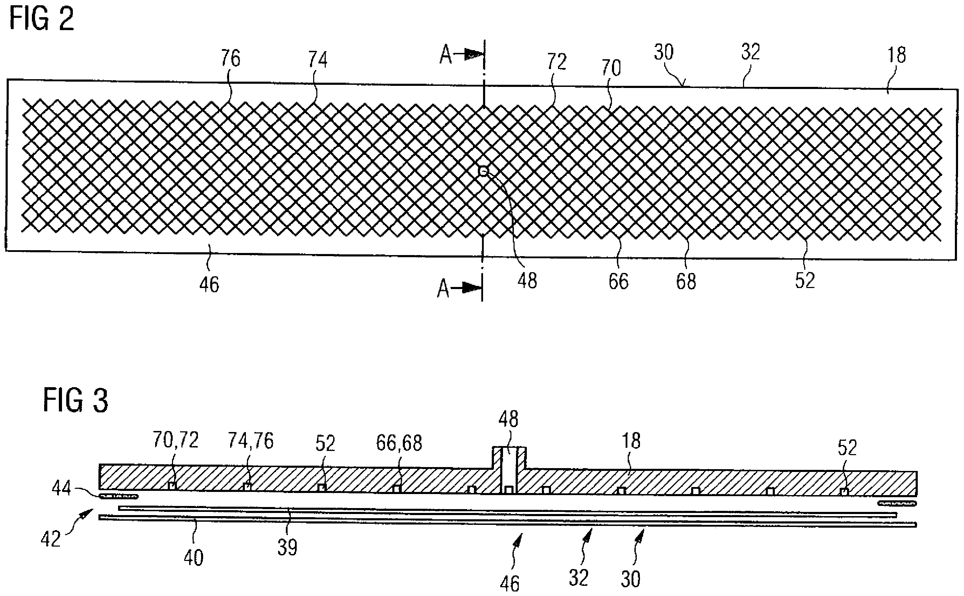

Fig. 2 zeigt eine untere Ansicht des ersten Teilformwerkzeuges 18. In der Mitte des ersten Teilformwerkzeuges 18 ist die Vakuumleitung 48 angeordnet. Auf der gesamten Unterseite des ersten Teilformwerkzeuges 18 sind Strömhilfen 52 in Form von Rillen 66 bzw. Kanälen 68 angeordnet. Alternativ können die Strömhilfen 52 auch aus Gewebe 70, Vlies 72, Gewirk 74 oder einem Gitter 76 gebildet sein.

Fig. 3 zeigt eine Schnittansicht durch die Linie A-A der Fig. 2, d.h. durch die Linie, auf der die Vakuumleitung 48 angeordnet ist. Damit zeigt Fig. 3 eine vergrößerte Darstellung des bereits in Fig. 1 beschriebenen ersten Teilformwerkzeuges 18.

Neben der mittig angeordneten Vakuumleitung 48 weist das erste Teilformwerkzeug 18 an seiner dem zweiten Formwerkzeug 16 zuzuwendenden Seite eine Mehrzahl von Strömhilfen 52 in Form von Rillen 66 auf. Weiter ist an dieser Seite ein Verbund 42 aus einer semipermeablen Membran 39 und einer Abzieheinrichtung 40 über einen umlaufenden Klebstoff 44 angebracht.

Zur Herstellung von faserverstärkten Bauteilen mittels des Injektionsverfahrens wird zunächst das erste Formwerkzeug 14 durch Verbinden von mehreren Teilformwerkzeugen 18, 20 gebildet. Im vorliegenden Fall werden drei erste Teilformwerkzeuge 18 und zwei zweite Teilformwerkzeuge 20 miteinander verbunden.

Es werden zunächst die Teilbereiche 32 der Formoberfläche 30 des ersten Formwerkzeuges 14 gebildet. Dazu wird an dem ersten Teilformwerkzeug 18 eine Vakuumleitung 48 vorgesehen, die an eine Vakuumeinrichtung 50 angeschlossen werden kann. Zur besseren Gasleitung zu dieser Vakuumleitung 48 hin werden auf einer Seite, die im späteren Aufbau dem zweiten Formwerkzeug 16 zugewendet ist, Strömhilfen 52 in Form von Rillen 66 vorgesehen. Auf die mit den Rillen 66 versehene Seite des ersten Teilformwerkzeuges 18 wird mit Hilfe eines umlaufenden Klebstoffes 44 ein Verbund 42 aus einer semipermeablen Membran 39 und einer Abzieheinrichtung 40 fixiert.

In dem zweiten Teilformwerkzeug 20 wird eine Matrixleitung 60 vorgesehen. An der im späteren Aufbau dem zweiten Formwerkzeug 16 zuzuwendenden Seite des zweiten Teilformwerkzeuges 20 wird eine Fließhilfe 54 vorgesehen, die das Verteilen des Matrixmaterials 37 erleichtert. Weiter wird auch hier eine Abzieheinrichtung 40 fixiert.

Nach Herstellen der Teilformwerkzeuge 18, 20 werden diese mittels Verbindungseinrichtungen 22 vakuumdicht miteinander verbunden. Als Verbindungseinrichtung 22 kann beispielsweise ein flexibles Klebe- oder Dichtband verwendet werden, das an den Stoßstellen der Teilformwerkzeuge 18, 20 angebracht wird. Weiter kann jedoch auch ein flüssiger oder gelartiger Dichtstoff verwendet werden, der beispielsweise durch eine Düse auf die Stoßstellen aufgetragen wird und anschließend vernetzt. Auch die Verwendung von Profildichtungen, die an den Rändern der Teilformwerkzeuge 18, 20 aufgeklebt oder darin eingelassen sind, sind denkbar. Eine weitere Möglichkeit besteht in dem Vorsehen von flexiblen Dichtlippen, die an den Rändern der Teilformwerkzeuge 18, 20 angebracht oder in diese integriert sind.

Zur Herstellung des faserverstärkten Bauteiles 12 wird nun ein Fasermaterial 38 auf das zweite Formwerkzeug 16 gelegt. Das aus den beiden Teilformwerkzeugen 18, 20 gebildete erste Formwerkzeug 14 wird oberhalb des Fasermaterials 38 angeordnet. Das erste Formwerkzeug 14 wird nun mit dem zweiten Formwerkzeug 16 über Abschlusseinrichtungen 28 vakuumdicht verbunden. Dadurch bildet sich zwischen den beiden Formwerkzeugen 14, 16 das zu evakuierende Formvolumen 36. Die Matrixleitungen 16 in dem zweiten Teilformwerkzeug 20 werden nun mit der Matrixverteilungseinrichtung 62 verbunden, während die Vakuumleitungen 48 in den ersten Teilformwerkzeugen 18 mit der Vakuumeinrichtung 50 verbunden werden.

Durch das Anlegen eines Vakuums durch beispielsweise Einschalten einer Vakuumpumpe wird in dem Formvolumen 36 ein Unterdruck erzeugt, der das Matrixmaterial 37 durch die Matrixverteilungseinrichtung 62 und die Matrixleitungen 60 in das Formvolumen 36 hineinzieht. Durch die Fließhilfen 54, die an der zum zweiten Formwerkzeug 16 zuzuwendenden Seite der zweiten Teilformwerkzeuge 20 angeordnet sind, verteilt sich das Matrixmaterial 37 schnell und gleichmäßig über dem Fasermaterial 38 und durchtränkt dieses im Wesentlichen in Dickenrichtung. Gase, die in dem Fasermaterial 38 und/oder dem Matrixmaterial 37 vorhanden sind, können nun über die Vakuumeinrichtung 50 entweichen.

Die an dem ersten Teilformwerkzeug 18 vorgesehene semipermeable Membran 39 verhindert, dass das Matrixmaterial 37 in die Vakuumleitung 48 und die Strömhilfen 52 eindringt. Die Strömhilfen 52 bewirken, dass die Luft bzw. jegliches andere in dem Formvolumen 36 vorhandene Gas schnell zu den Vakuumleitungen 48 in den ersten Teilformwerkzeugen 18 hingeleitet wird und so das Formvolumen 36 gleichmäßig und rasch evakuiert werden kann.

Das Vakuum in dem Formvolumen 36 wird so lange aufrecht erhalten, bis auch die unter den ersten Teilformwerkzeugen 18 befindlichen Bereiche des Fasermaterials 38 vollständig getränkt sind. Nachdem das mit dem Matrixmaterial 37 getränkte Fasermaterial 38 vollständig ausgehärtet ist, werden die Formwerkzeuge 14, 16 von dem so gebildeten faserverstärkten Bauteil 12 abgelöst. Dies wird erleichtert durch die Abzieheinrichtung 40, die ein Ankleben der Formwerkzeuge 14, 16 an dem fertigen faserverstärkten Bauteil 12 verhindert.

Durch die oben beschriebene Herstellvorrichtung und das oben beschriebene Verfahren kann ein faserverstärktes Bauteil 12 in beliebiger Form und Größe einfach und ohne einen aufwändigen Aufbau von mehreren Räumen über dem Fasermaterial 38 hergestellt werden.

Bei der vakuumunterstützten Prozessführung (Englisch: vacuum assisted process, VAP) trennt die flüssigkeitsundurchlässige semipermeable Membran 39 den mit Matrixmaterial 37, vorzugsweise mit Harz, zu füllenden inneren Bereich, das Formvolumen 36, vom Vakuumbereich ab, ohne die Abfuhr von Gasen (vorrangig Luft) aus dem Formvolumen 36, d.h. sowohl aus dem in das Formvolumen 36 eingebrachten Matrixmaterial 37 als auch aus dem Fasermaterial 38, zu beeinträchtigen. Bei dem hier beschriebenen Aufbau werden der Vakuumanschluss in Form einer Vakuumleitung 48 und die semipermeable Membran 39 in ein oder mehrere erste Teilformwerkzeuge 18 integriert, die als Druckstücke ausgeführt sind, die auf der Bauteilinnenseite angeordnet werden.

Eine wichtige Aufgabe dieser Herstellvorrichtung besteht darin, die sich im Fasermaterial 38 befindliche Luft flächig abzusaugen. Um eine ausreichende Luftleitung zur Vakuumleitung 48 hin zu gewährleisten, kann es vorteilhaft sein, entsprechend dimensionierte Rillen 66 in der Unterseite des ersten Teilformwerkzeuges 18 vorzusehen. Alternativ könnte zu diesem Zweck auch ein Textil (z.B. Gewebe 70, Gewirk 74, Vlies 72) oder Gitter 76 zwischen der semipermeablen Membran 39 und der Unterseite des ersten Teilformwerkzeuges 18 verwendet werden, wobei eine zu starke Abzeichnung in die Bauteiloberfläche vermieden werden sollte. Eine Lochfolie hat als Abzieheinrichtung 40 den Zweck, nach der Aushärtung des faserverstärkten Bauteils 12 die problemlose Entformung des ersten Teilformwerkzeuges 18 oder des zweiten Teilformwerkzeuges 20 zu ermöglichen und ein Anhaften der semipermeablen Membran 39 am faserverstärkten Bauteil 12 zu verhindern. Die semipermeable Membran 39 und die Abzieheinrichtung 40 werden als Zuschnitte entlang des Randes auf die Unterseite der Teilformwerkzeuge 18, 20 aufgeklebt, wobei dieser umlaufende Klebstoff 44 zum einen die Zuschnitte fixiert und zum anderen verhindert, dass über den Rand das flüssige Matrixmaterial 37 in den Vakuumbereich einströmen kann. Es ist sicherlich vorteilhaft, einen Verbund 42 aus semipermeabler Membran 39 und Abzieheinrichtung 40 zu verwenden, anstatt zwei Folienzuschnitte einzeln auf den Teilformwerkzeugen 18, 20 anzubringen.

Die Teilformwerkzeuge 18, 20 können je nach Anforderung steif oder flexibel ausgeführt sein und vorzugsweise aus Metall oder Kunststoff bestehen.

Um ein trockenes Fasermaterial 38 zum faserverstärkten Bauteil 12 weiter zu verarbeiten, sollte es in einem geeigneten Werkzeug zunächst mit flüssigem Matrixmaterial 37, vorzugsweise Harz, getränkt und anschließend ausgehärtet werden. Bei der VAP-Technik werden vorteilhaft entsprechende Vorkehrungen getroffen, um das Matrixmaterial 37 hinreichend schnell in dem Formvolumen 36 zu verteilen. Bewährt hat sich hierbei eine Kombination aus einem oder mehreren Punkt- oder Linienangüssen mit einem flächigen Verteilermedium (z.B. ein offen strukturiertes Textil) an der Oberfläche des faserverstärkten Bauteiles 12. Das Matrixmaterial 37 wird also vorrangig mit verhältnismäßig geringem Fließwiderstand über die Oberfläche des faserverstärkten Bauteils 12 verteilt und tränkt das Fasermaterial 38 im Wesentlichen in Dickenrichtung. Es ist auch denkbar, dass Kanäle 68 und Rillen 66 zur Verteilung des Matrixmaterials 37 in das Formwerkzeug 14, 16 oder in die Teilformwerkzeuge 18, 20 eingebracht werden, wodurch Hilfsstoffe (Angusskanäle und flächige Fließhilfen) eingespart werden. Die integrierte Verteilung des Matrixmaterials 37 wird dabei vorzugsweise so ausgeführt, dass sie sich möglichst wenig in die Oberfläche des faserverstärkten Bauteils 12 einprägt.

Bei dem im Folgenden erläuterten Anwendungsbeispiel einer stringerversteiften Platte soll beispielhaft die Verteilung des Matrixmaterials 37 in die Teilformwerkzeuge 20 der Stringer integriert sein, andere Angussvarianten sind natürlich auch denkbar.

In Fig. 1 ist ein Ausführungsbeispiel eines Infusionsaufbaus zur Herstellung einer Platte mit zwei Versteifungsprofilen dargestellt, wobei es sich um einen Schnitt quer zu den Versteifungen handelt. Im Folgenden wird die dem zweiten Formwerkzeug 16 zugewandte Seite des faserverstärkten Bauteils 12 als Außenseite und die mit den Versteifungsprofilen versehene Seite als Innenseite bezeichnet. Es befinden sich zwei zweite Teilformwerkzeuge 20 mit integrierter Matrixleitung 60 oberhalb der Stringer, die verbleibende Oberfläche der Bauteilinnenseite wird von drei ersten Teilformwerkzeugen 18 mit integrierter Vakuumleitung 48 bedeckt. Nun sind lediglich die Spalte zwischen den Teilformwerkzeugen 18, 20 sowie der äußere Rand des so gebildeten ersten Formwerkzeugs 14 zum zweiten Formwerkzeug 16 hin abzudichten, um eine abgeschlossene Infusionskammer bzw. ein abgeschlossenes Formvolumen 36 zu erhalten.

Für die Infusion selbst werden nun die ersten Teilformwerkzeuge 18 mit integrierter Vakuumleitung 48 an eine Vakuumeinrichtung 50 angeschlossen und die zweiten Teilformwerkzeuge 20 mit integrierter Matrixleitung 60 werden entsprechend an eine Matrixverteilungseinrichtung 62 angeschlossen. Durch das Vakuum wird die in dem Fasermaterial 38 befindliche Luft abgesaugt. Der somit in der Infusionskammer herrschende Unterdruck wirkt als treibende Kraft für den Fluss des Matrixmaterials 37. Das Matrixmaterial 37 strömt entlang der Stringer in das Formvolumen 36 ein und verteilt sich nach unten und seitwärts, bis auch die Bereiche unter den ersten Teilformwerkzeugen 18 vollständig getränkt sind. Die an diesen ersten Teilformwerkzeugen 18 angebrachten semipermeablen Membranen 39 verhindern dabei, dass das Matrixmaterial 37 in die Vakuumleitungen 48 eindringen kann.

Zum vakuumdichten Abschließen des Formvolumens 36 sind verschiedene Varianten denkbar. Dabei ist zu beachten, dass die Abdichtung in einigen Fällen eine gewisse Flexibilität aufweisen sollte, um gegebenenfalls auftretende Verschiebungen, z.B. durch das Kompaktieren des Fasermaterials 38 unter Vakuum oder während der Infusion bzw. aufgrund thermischer Ausdehnung, ausgleichen zu können. Hier sollen einige Beispiele genannt werden:
1. Ein flexibles Klebe-/Dichtband, das an den Stoßstellen der Teilformwerkzeuge 18, 20 und entlang der Ränder der Teilformwerkzeuge 18, 20 zum zweiten Formwerkzeug 16 hin angebracht wird.
2. Flüssiger oder gelartiger Dichtstoff, der z.B. durch eine Düse auf die Dichtfugen aufgetragen wird und anschließend vernetzt.
3. An den Teilformwerkzeugen 18, 20 aufgeklebte oder in diese eingelassene Profildichtungen (z.B. Nut mit Silikondichtschnur).
4. An den Teilformwerkzeugen 18, 20 angebrachte oder in diese integrierte flexible Dichtlippen (z.B. aus Silikon).

### Bezugszeichenliste

- 10: Herstellvorrichtung
- 12: faserverstärktes Bauteil
- 14: erstes Formwerkzeug
- 16: zweites Formwerkzeug
- 18: erstes Teilformwerkzeug
- 20: zweites Teilformwerkzeug
- 22: Verbindungseinrichtung
- 24: erstes äußerstes Teilformwerkzeug
- 26: zweites äußerstes Teilformwerkzeug
- 28: Abschlusseinrichtung
- 30: Formoberfläche
- 32: erster Teilbereich
- 34: zweiter Teilbereich
- 36: Formvolumen
- 37: Matrixmaterial
- 38: Fasermaterial
- 39: semipermeable Membran
- 40: Abzieheinrichtung
- 42: Verbund
- 44: umlaufender Klebstoff
- 46: Evakuierungsbereich
- 48: Vakuumleitung
- 50: Vakuumeinrichtung
- 52: Strömhilfe
- 54: Fließhilfe
- 55: Versteifungselement
- 55a: Hohlraum
- 56: Injektionseinrichtung
- 58: Injektionsbereich
- 60: Matrixleitung
- 62: Matrixverteilungseinrichtung

- 66: Rillen
- 68: Kanäle
- 70: Gewebe
- 72: Vlies
- 74: Gewirk
- 76: Gitter

## Patentansprüche

1. Formwerkzeug (14) für eine Herstellvorrichtung (10) zum Herstellen von faserverstärkten Bauteilen (12) mittels eines Injektionsverfahrens,
wobei das Formwerkzeug (14) eine Formoberfläche (30) zum Formen einer Oberfläche des faserverstärkten Bauteils (12) aufweist, wobei das Formwerkzeug (14) aus mehreren Teilformwerkzeugen (18, 20) gebildet ist und umfasst:
ein erstes Teilformwerkzeug (18), das einen ersten Teilbereich (32) der Formoberfläche (30) umfasst und das einen Evakuierungsbereich (46) zum Evakuieren eines durch das Formwerkzeug (14) begrenzten Formvolumens (36) durch den ersten Teilbereich (32) hindurch aufweist, wobei im ersten Teilbereich (32) Strömhilfen (52) zum Unterstützen eines Evakuierens des Formvolumens (30) angeordnet sind, und
ein zweites Teilformwerkzeug (20), das einen zweiten Teilbereich (34) der Formoberfläche (30) umfasst und das einen zum Injizieren von Matrixmaterial (37) durch den zweiten Teilbereich (34) hindurch in an der Formoberfläche (30) befindliches Fasermaterial (38) ausgebildeten Injektionsbereich (58) aufweist, wobei im zweiten Teilbereich (34) der Formoberfläche (30) Fließhilfen (54) zur Unterstützung einer Verteilung des injizierten Matrixmaterials (37) angeordnet sind,
**dadurch gekennzeichnet, dass** die Fließhilfen (54) Rillen (66) oder Kanäle (68) derart aufweisen, dass das Matrixmaterial (37) gleichmäßig über dem Fasermaterial (38) verteilbar ist.

2. Formwerkzeug (14) nach Anspruch 1,
**dadurch gekennzeichnet, dass** an der Formoberfläche (30) eine Abzieheinrichtung (40) zum leichteren Entfernen des Bauteils von dem Formwerkzeug (14) angeordnet ist und/oder dass der erste Teilbereich (32) der Formoberfläche (30) eine semipermeable Membran (39) zum Durchlassen von Gasen und zum Zurückhalten von Matrixmaterial (37) aufweist.

3. Formwerkzeug (14) nach Anspruch 2,
**dadurch gekennzeichnet, dass** im ersten Teilbereich (32) der Formoberfläche (30) die semipermeable Membran (39) und die Abzieheinrichtung (40) einen Verbund (42) bilden und/oder dass die semipermeable Membran (39) und/oder die Abzieheinrichtung (40) und/oder der Verbund (42) mit einem umlaufenden Klebstoff (44) an der Formoberfläche (30) fixiert werden.

4. Formwerkzeug (14) nach einem der Ansprüche 1 bis 3,
**dadurch gekennzeichnet, dass** die Strömhilfen (52) Rillen (66), Kanäle (68), Gewebe (70), Vlies (72), Gewirk (74) oder ein Gitter (76) aufweisen.

5. Formwerkzeug (14) nach einem der voranstehenden Ansprüche,
**dadurch gekennzeichnet, dass** die Teilformwerkzeuge voneinander getrennt aber miteinander verbindbar sind.

6. Formwerkzeug (14) nach Anspruch 5,
**dadurch gekennzeichnet, dass** eine Verbindungseinrichtung (22) zum dichten Verbinden der Teilformwerkzeuge (18, 20) vorgesehen ist.

7. Herstellvorrichtung (10) zum Herstellen von faserverstärkten Bauteilen (12) mittels eines Injektionsverfahrens mit
einem Formwerkzeug (14), das eine Formoberfläche (30) zum Bilden einer Oberfläche des faserverstärkten Bauteils (12) hat,
einer Vakuumeinrichtung (50) zur Evakuierung eines zumindest teilweise durch die Formoberfläche (30) begrenzten Formvolumens (36), innerhalb dem das Injektionsverfahren durchzuführen ist,
einer Injektionseinrichtung (56) zum Injizieren von Matrixmaterial (37) in das Formvolumen (36), um ein innerhalb des Formvolumens (36) im Bereich der Formoberfläche (30) anzuordnendes Fasermaterial (38) zu durchdringen,
wobei das Formwerkzeug (14) nach einem der Ansprüche 1 bis 6 ausgebildet ist.

8. Herstellvorrichtung (10) nach Anspruch 7,
**dadurch gekennzeichnet,**
**dass** die Injektionseinrichtung (56) eine Matrixverteilungseinrichtung (62) zum Verteilen eines Matrixmaterials (37) aufweist.

9. Herstellvorrichtung (10) nach einem der Ansprüche 7 oder 8,
**dadurch gekennzeichnet, dass** eine umlaufende Abschlusseinrichtung (28) zum Abdichten des zu evakuierenden Formvolumens (36) an dem Formwerkzeug (14) vorgesehen ist.

10. Herstellvorrichtung (10) nach einem der Ansprüche 7 bis 9,
**dadurch gekennzeichnet, dass** der Injektionsbereich (58) Matrixleitungen (60) zum Anschließen an die Injektionseinrichtung (56) aufweist und/oder dass der Evakuierungsbereich (46) Vakuumleitungen (48) zum Anschließen an die Vakuumeinrichtung (50) aufweist.

11. Verfahren zum Herstellen von faserverstärkten Bauteilen (12) mittels eines Injektionsverfahrens unter Verwendung eines Formwerkzeugs (14) nach einem der Ansprüche 1 bis 6 und/oder einer Herstellvorrichtung (10) nach einem der Ansprüche 7 bis 10 mit den Schritten:
Anordnen von Fasermaterial (38) in einem Formvolumen (36), das wenigstens an einer Seite durch eine Formoberfläche (30) eines aus mehreren Teilformwerkzeugen (18, 20) gebildeten ersten Formwerkzeugs (14) begrenzt wird, wobei die Formoberfläche (30) des ersten Formwerkzeugs (14) einen ersten Teilbereich (32) an einem ersten Teilformwerkzeug (18) und einen zweiten Teilbereich (34) an einem zweiten Teilformwerkzeug (20) hat, wobei das erste Formwerkzeug (14) und ein zweites Formwerkzeug (16) an einander zuzuwendenden Seiten je eine Formoberfläche (30) aufweisen,
Evakuieren des Formvolumens (36) durch den ersten Teilbereich (32) der Formoberfläche (30) hindurch, wobei im ersten Teilbereich (32) Strömhilfen (52) zum Unterstützen eines Evakuierens des Formvolumens (30) angeordnet sind, und Injizieren von Matrixmaterial (37) in das Formvolumen (30) durch den zweiten Teilbereich (34) der Formoberfläche (30) hindurch, wobei im zweiten Teilbereich (34) der Formoberfläche (30) Fließhilfen (54) zur Unterstützung einer Verteilung des injizierten Matrixmaterials (37) angeordnet sind, wobei das Matrixmaterial mittels Rillen (66) oder Kanälen (68) der Fließhilfen (54) gleichmäßig über dem Fasermaterial (38) verteilt wird.

12. Verfahren nach Anspruch 11,
wobei das Evakuieren durch eine an der Formoberfläche (30) angeordnete semi-permeable Membran (39) erfolgt.

13. Verfahren nach einem der Ansprüche 11 oder 12,
**gekennzeichnet durch**
Bilden der Formoberfläche (30) durch Verbinden von wenigstens zwei der voneinander getrennt ausgebildeten Teilformwerkzeugen (18, 20).

## Claims

1. Mould (14) for a production apparatus (10) for producing fibre-reinforced components (12) by means of an injection method,
wherein the mould (14) has a mould surface (30) for moulding a surface of the fibre-reinforced component (12), wherein the mould (14) is formed of a plurality of partial moulds (18, 20) and comprises:
a first partial mould (18) which comprises a first partial region (32) of the mould surface (30) and which has an evacuation region (46) for evacuating a mould volume (36) which is delimited by the mould (14) through the first partial region (32), wherein flow aids (52) for supporting evacuation of the mould volume (30) are arranged in the first partial region (32), and
a second partial mould (20) which comprises a second partial region (34) of the mould surface (30) and which has an injection region (58) which is configured for injecting matrix material (37) through the second partial region (34) into fibrous material (38) located at the mould surface (30), wherein flow aids (54) for supporting distribution of the injected matrix material (37) are arranged in the second partial region (34) of the mould surface (30),
**characterized in that** the flow aids (54) have grooves (66) or channels (68) such that the matrix material (37) can be distributed uniformly over the fibrous material (38).

2. Mould (14) according to Claim 1,
**characterized in that** an extraction device (40) for more easily removing the component from the mould (14) is arranged at the mould surface (30), and/or **in that** the first partial region (32) of the mould surface (30) has a semi-permeable membrane (39) for allowing the passage of gases and for restraining matrix material (37).

3. Mould (14) according to Claim 2,
**characterized in that** the semi-permeable membrane (39) and the extraction device (40) form a composite (42) in the first partial region (32) of the mould surface (30), and/or **in that** the semi-permeable membrane (39) and/or the extraction device (40) and/or the composite (42) are fixed to the mould surface (30) with a peripheral adhesive (44).

4. Mould (14) according to one of Claims 1 to 3,
**characterized in that** the flow aids (52) have grooves (66), channels (68), woven fabric (70), nonwoven fabric (72), knitted fabric (74) or a lattice (76).

5. Mould (14) according to one of the preceding claims,
**characterized in that** the partial moulds are separate from one another but can be connected to one another.

6. Mould (14) according to Claim 5,
**characterized in that** a connecting device (22) is provided for closely connecting the partial moulds (18, 20) .

7. Production apparatus (10) for producing fibre-reinforced components (12) by means of an injection method, having
a mould (14) which has a mould surface (30) for forming a surface of the fibre-reinforced component (12),
a vacuum device (50) for evacuating a mould volume (36) which is at least partially delimited by the mould surface (30) and within which the injection method is to be carried out,
an injection device (56) for injecting matrix material (37) into the mould volume (36), in order to penetrate a fibrous material (38) which is to be arranged within the mould volume (36) in the region of the mould surface (30),
wherein the mould (14) is configured according to one of Claims 1 to 6.

8. Production apparatus (10) according to Claim 7,
**characterized in that** the injection device (56) has a matrix-distributing device (62) for distributing a matrix material (37).

9. Production apparatus (10) according to either of Claims 7 and 8,
**characterized in that** a peripheral termination device (28) for sealing off the mould volume (36) to be evacuated is provided on the mould (14).

10. Production apparatus (10) according to one of Claims 7 to 9,
**characterized in that** the injection region (58) has matrix lines (60) for connection to the injection device (56), and/or **in that** the evacuation region (46) has vacuum lines (48) for connection to the vacuum device (50) .

11. Method for producing fibre-reinforced components (12) by means of an injection method using a mould (14) according to one of Claims 1 to 6 and/or a production apparatus (10) according to one of Claims 7 to 10, having the steps of:
arranging fibrous material (38) in a mould volume (36) which is delimited, at least on one side, by a mould surface (30) of a first mould (14) which is formed of a plurality of partial moulds (18, 20), wherein the mould surface (30) of the first mould (14) has a first partial region (32), at a first partial mould (18), and a second partial region (34), at a second partial mould (20), wherein the first mould (14) and a second mould (16), on sides which are to be turned towards each other, have a respective mould surface (30),
evacuating the mould volume (36) through the first partial region (32) of the mould surface (30), wherein flow aids (52) for supporting evacuation of the mould volume (30) are arranged in the first partial region (32), and
injecting matrix material (37) into the mould volume (30), through the second partial region (34) of the mould surface (30), wherein flow aids (54) for supporting distribution of the injected matrix material (37) are arranged in the second partial region (34) of the mould surface (30), wherein the matrix material is distributed uniformly over the fibrous material (38) by means of grooves (66) or channels (68) of the flow aids (54).

12. Method according to Claim 11,
wherein the evacuation is performed through a semi-permeable membrane (39) which is arranged at the mould surface (30).

13. Method according to either of Claims 11 and 12,
**characterized by**
forming the mould surface (30) by connecting at least two of the partial moulds (18, 20) which are configured separately from one another.

## Revendications

1. Outil de moulage (14) pour un dispositif de fabrication (10) servant à la fabrication de composants (12) renforcés par des fibres à l'aide d'un procédé d'injection,
l'outil de moulage (14) comprenant une surface de moulage (30) servant au moulage d'une surface du composant (12) renforcé par des fibres, l'outil de moulage (14) étant formé à partir de plusieurs outils de moulage partiels (18, 20) et comportant :
un premier outil de moulage partiel (18), qui comporte une première région partielle (32) de la surface de moulage (30) et qui comprend une région de création de vide (46) servant à la création de vide dans un volume de moulage (36) limité par l'outil de moulage (14) à travers la première région partielle (32), des auxiliaires d'écoulement (52) servant à favoriser une création de vide dans le volume de moulage (30) étant disposés dans la première région partielle (32), et
un deuxième outil de moulage partiel (20), qui comporte une deuxième région partielle (34) de la surface de moulage (30) et qui comprend une région d'injection (58) réalisée pour l'injection de matière de matrice (37) à travers la deuxième région partielle (34) dans de la matière fibreuse (38) se trouvant au niveau de la surface de moulage (30), des auxiliaires d'écoulement (54) servant à favoriser une distribution de la matière de matrice injectée (37) étant disposés dans la deuxième région partielle (34) de la surface de moulage (30),
**caractérisé en ce que** les auxiliaires d'écoulement (54) comprennent des rainures (66) ou des canaux (68), de telle sorte que la matière de matrice (37) puisse être répartie uniformément sur la matière fibreuse (38).

2. Outil de moulage (14) selon la revendication 1, **caractérisé en ce qu'**un dispositif d'extraction (40) servant à un retrait plus facile du composant de l'outil de moulage (14) est disposé sur la surface de moulage (30) et/ou **en ce que** la première région partielle (32) de la surface de moulage (30) comprend une membrane semiperméable (39) servant au passage de gaz et à la retenue de la matière de matrice (37).

3. Outil de moulage (14) selon la revendication 2, **caractérisé en ce que** la membrane semiperméable (39) et le dispositif d'extraction (40) forment un ensemble (42) dans la première région partielle (32) de la surface de moulage (30) et/ou **en ce que** la membrane semiperméable (39) et/ou le dispositif de retrait (40) et/ou l'ensemble (42) sont fixés à la surface de moulage (30) à l'aide d'un adhésif périphérique (44).

4. Outil de moulage (14) selon l'une des revendications 1 à 3,
**caractérisé en ce que** les auxiliaires d'écoulement (52) comprennent des rainures (66), des canaux (68), un tissu (70), un non-tissé (72), un tricotage (74) ou un treillis (76) .

5. Outil de moulage (14) selon l'une des revendications précédentes,
**caractérisé en ce que** les outils de moulage partiels sont séparés l'un de l'autre mais peuvent être reliés l'un à l'autre.

6. Outil de moulage (14) selon la revendication 5, **caractérisé en ce qu'**un dispositif de liaison (22) est prévu pour relier de manière étanche les outils de moulage partiels (18, 20).

7. Dispositif de fabrication (10) servant à la fabrication de composants (12) renforcés par des fibres à l'aide d'un procédé d'injection, comprenant
un outil de moulage (14) qui comporte une surface de moulage (30) servant à la formation d'une surface du composant (12) renforcé par des fibres,
un dispositif à vide (50) servant à la création de vide dans un volume de moulage (36) limité au moins partiellement par la surface de moulage (30), volume à l'intérieur duquel le procédé d'injection doit être mis en œuvre,
un dispositif d'injection (56) servant à l'injection de matière de matrice (37) dans le volume de moulage (36), pour traverser une matière fibreuse (38) à disposer dans la région de la surface de moulage (30) à l'intérieur du volume de moulage (36),
l'outil de moulage (14) étant réalisé selon l'une des revendications 1 à 6.

8. Dispositif de fabrication (10) selon la revendication 7,
**caractérisé en ce que**
le dispositif d'injection (56) comprend un dispositif de distribution de matrice (62) servant à la distribution d'une matière de matrice (37).

9. Dispositif de fabrication (10) selon l'une des revendications 7 ou 8,
**caractérisé en ce qu'**un dispositif de fermeture périphérique (28) servant à fermer hermétiquement le volume de moulage (36) dans lequel le vide doit être créé est prévu sur l'outil de moulage (14).

10. Dispositif de fabrication (10) selon l'une des revendications 7 à 9,
**caractérisé en ce que** la région d'injection (58) comprend des conduits de matrice (60) destinés au raccordement au dispositif d'injection (56) et/ou **en ce que** la région de création de vide (46) comprend des conduits à vide (48) destinés au raccordement au dispositif à vide (50).

11. Procédé de fabrication de composants (12) renforcés par des fibres à l'aide d'un procédé d'injection en utilisant un outil de moulage (14) selon l'une des revendications 1 à 6 et/ou un dispositif de fabrication (10) selon l'une des revendications 7 à 10, comprenant les étapes :
agencement d'une matière fibreuse (38) dans un volume de moulage (36), qui est limité au moins sur un côté par une surface de moulage (30) d'un premier outil de moulage (14) formé à partir de plusieurs outils de moulage partiels (18, 20), la surface de moulage (30) du premier outil de moulage (14) comportant une première région partielle (32) sur un premier outil de moulage partiel (18) et une deuxième région partielle (34) sur un deuxième outil de moulage partiel (20), le premier outil de moulage (14) et un deuxième outil de moulage (16) comprenant respectivement une surface de moulage (30) sur des côtés à mettre en regard,
création de vide dans le volume de moulage (36) à travers la première région partielle (32) de la surface de moulage (30), des auxiliaires d'écoulement (52) servant à favoriser une création de vide dans le volume de moulage (30) étant disposés dans la première région partielle (32), et
injection d'une matière de matrice (37) dans le volume de moulage (30) à travers la deuxième région partielle (34) de la surface de moulage (30), des auxiliaires d'écoulement (54) servant à favoriser une distribution de la matière de matrice injectée (37) étant disposés dans la deuxième région partielle (34) de la surface de moulage (30), la matière de matrice étant distribuée uniformément sur la matière fibreuse (38) au moyen de rainures (66) ou de canaux (68) des auxiliaires d'écoulement (54).

12. Procédé selon la revendication 11,
dans lequel la création de vide s'effectue à travers une membrane semiperméable (39) disposée sur la surface de moulage (30).

13. Procédé selon l'une des revendications 11 ou 12,
**caractérisé par**
la formation de la surface de moulage (30) par liaison d'au moins deux des outils de moulage partiels (18, 20) réalisés de manière séparée les uns des autres.
